# FASCICULE DE BREVET EUROPEEN

(11) **EP 1 052 782 B1**
(45) Date de publication et mention de la délivrance du brevet: **03.01.2007**
(21) Numéro de dépôt: 00401220.9
(22) Date de dépôt: 04.05.2000
(51) Int. Cl.: H04B 1/30, H04L 27/233

(54) **Téléphone mobile muni d'un circuit de démodulation avec oscillateur local amélioré**
Mobiltelefon mit einer Demodulationsschaltung mit einem verbesserten Überlagerungsoszillator
Mobile telephone with a demodulation circuit having an improved local oscillator

(30) Priorité: 10.05.1999 FR 9905925
(43) Date de publication de la demande: 15.11.2000
(73) Titulaire: TCL & ALCATEL MOBILE PHONES LIMITED, China Hong Kong City, 33 Canton Road, Tsim Sha Tsui,Kowloon, Hong Kong (CN)
(72) Inventeur: Parisel, Arnaud, 75017 Paris (FR); Dugast, Xavier, 78400 Chatou (FR)
(74) Mandataire: Feray, Valérie

(56) Documents cités:
- EP-A- 0 483 090
- US-A- 5 557 643
- "Time-Base Oscillator for RTC ICs" APPLICATION NOTES TEXAS INSTRUMENTS, [Online] 1 août 1996 (1996-08-01), pages 1-11, Extrait de l'Internet: URL:http://focus.ti.com/lit/an/slua051/slu a051.pdf>
- KRAUSS, H.L.; BOSTIAN, C.W.; RAAB, F.H.: "Solid State Radio Engineering" 1980, JOHN WILEY & SONS , USA * page 151 - page 154 *

## Description

La présente invention à pour objet un circuit de démodulation avec oscillateur local amélioré, utilisable principalement dans le domaine de la téléphonie cellulaire, notamment de type GSM. Dans ce domaine, des protocoles de reconnaissance sont institués au moment de la mise en service d'un téléphone mobile dans un réseau. Ces protocoles imposent des contraintes techniques difficiles à satisfaire pour les équipements des téléphones mobiles. La présente invention à pour objet de résoudre efficacement un problème qui survient au moment de cette mise en service et qui, dans l'état de la technique, ne peut être résolu qu'en choisissant des oscillateurs locaux parfaits, et dont le coût de mise au point est excessif.

Au moment où un téléphone mobile est mis en service dans un réseau cellulaire, ce téléphone mobile entre en contact avec une station de base. Comme à priori le téléphone mobile ne sait pas dans quelle cellule de ce réseau il se trouve, une routine de mise en service comporte la recherche d'un signal de balise le plus puissant reçu à l'endroit où se trouve ce téléphone mobile. Un tel signal de balise émis par la station de base d'une cellule comporte différents types de signaux qui sont nécessaires à l'accrochage de nouveaux téléphones mobiles dans la cellule, et au maintien sous surveillance des téléphones mobiles déjà présents. Ce signal de balise est en général émis à une fréquence de balise fixe Fi. D'une cellule à l'autre Fi peut varier. Dans certains cas certaines cellules adjacentes peuvent partager une même fréquence de balise. Dans tous les cas, le signal émis à la fréquence de balise est émis à un niveau de puissance plus élevé que les signaux utiles aux communications échangées entre la station de base de la cellule et un téléphone mobile, même le plus distant de cette station de base dans cette cellule. Le signal de balise est par ailleurs permanent. Bien qu'il soit tronçonné en trames, et dans ces trames en fenêtres temporelles dont la signification change d'une fenêtre à l'autre, l'émission est contante et au même niveau de puissance .

Sans entrer dans des détails trop importants, le signal de balise est formé par un motif répété au bout d'un certain nombre de trames, par exemples 51 trames dans le cadre du GSM. La durée d'une fenêtre temporelle étant de 577 microsecondes et dans cet exemple une trame comportant huit fenêtres, la durée d'une trame est de 4,615 millisecondes alors que la durée d'un motif est de l'ordre de 235 millisecondes. Ce motif comporte des groupements de dix ou onze trames.

Un premier groupement de trames de ce motif est différent d'un groupement suivant. Il comporte dans chacune des dix trames qui le compose respectivement des signaux dits FCH, SCH, BCCH et CCCH. Les signaux FCH signifient Frequency Control cHannel dont la traduction est canal de correction en fréquence. Ils correspondent à une émission d'une porteuse Fi (celle de la balise) modulée par une sinusoïde pure à 67,7 KHz du centre du canal. Une telle fréquence de modulation résulte en fait, dans un codage de type GSM avec une constellation de modulation à douze points, à transmettre des valeurs de codage I et Q valant successivement (1,0), (0,1), (-1,0) et (0,-1) et à répéter ces codages. L'émission de la porteuse modulée dure pendant toute une fenêtre temporelle.

Un téléphone mobile qui vient d'être mis en service peut ainsi rechercher d'abord quelle est la porteuse pour laquelle il reçoit le plus de puissance. Dans une bande normalisée de 35 MHz attribuée au GSM 900 MHz (d'autres largeurs de bande sont attribuées dans les normes DCS, PCS, voire UMTS), le téléphone mobile recherche une porteuse à une fréquence de balise qu'il reçoit le mieux. Ceci est réalisé par une scrutation dans la bande et par une détection simple, réalisée par exemple directement en sortie d'un circuit de réception, même avant démodulation. La scrutation comporte ainsi l'observation de ce qui se passe dans des canaux de largeur normalisée, de 200 KHz dans le cadre du GSM. En effet, alors que les fréquences porteuses dédiées à la transmission des signaux de communication sont soumises à une agilité de fréquence, d'une fenêtre temporelle à une autre, la fréquence de balise Fi est maintenue constante. Il suffit donc pour un téléphone mobile d'écouter successivement toutes les bandes pour connaître celle qui est la mieux reçue.

Une fois qu'une fréquence de balise Fi est identifiée, le téléphone mobile cherche à détecter quelle est la fenêtre temporelle pendant laquelle il reçoit un signal FCH modulant cette porteuse Fi par une sinusoïde pure à 67,7 KHz. C'est dans cette recherche qu'apparaissent plus particulièrement les problèmes résolus par l'invention. En effet, vu la largeur imposée pour les canaux, 200 KHz, des démodulateurs de circuits de démodulation comportent normalement un filtre, dit filtre de canal, en sortie. La largeur de bande d'un filtre de canal, en basse fréquence, va de - 100 KHz à + 100 KHz. De fait, la démodulation transpose le signal modulé par mélange du signal reçu avec un signal à la fréquence de porteuse Fi produit par un oscillateur local. Cependant cette démodulation ne se réalise pas parfaitement du fait de l'imprécision de réalisation de l'oscillateur local. Si l'oscillateur local, au lieu de produire un signal à une fréquence Fi produit un signal à une fréquence Fi - ε, le signal démodulé en sortie aura une fréquence égale à 67,7 KHz + ε.

Bien entendu si ε est petit aucun problème ne se présente. En particulier lors de la réalisation d'un téléphone mobile, lorsqu'il est neuf, l'oscillateur local peut être réglé pour que ε soit faible ou nul. En pratique, il faut que, rapporté à la fréquence de balise Fi, l'écart ε toléré soit inférieur à 23,5 parties par million (ppm) pour la bande GSM à 900 MHz et soit inférieur à 12,1 ppm dans la bande DCS à 1800 MHz, et soit également inférieur à 11,4 ppm dans la bande PCS à 2100 MHz. Ceci permet d'éviter des problèmes de démodulation dus à la présence du filtre de canal. En outre, des circuits de correction sont prévus dans un téléphone mobile pour mesurer l'écart ε et pour modifier la valeur des signaux démodulés en correspondance (et non pas pour modifier la fréquence de démodulation Fi + ε). En effet il n'est pas véritablement possible dans les chaînes de démodulation utilisées de modifier, par exemple par asservissement, la fréquence centrale de démodulation produite par un oscillateur local. On verra par la suite pourquoi l'architecture de ces oscillateurs locaux ne permet pas un tel réglage de la fréquence de démodulation. Par contre si l'écart ε est faible et notamment s'il est contenu dans les limites indiquées ci-dessus, il est possible de corriger les signaux démodulés de manière à leur faire restituer par décodage une valeur qui tient compte de l'écart ε mesuré. Cet écart ε est justement mesuré au moment de la réception des signaux FCH.

Malheureusement du fait du vieillissement des appareils, et dans certains cas du fait des conditions d'utilisation, en température et en tension du téléphone mobile, la fréquence de l'oscillateur local peut dériver. Cette dérive peut être suffisamment importante pour que la présence du filtre de canal vienne perturber la réception et la démodulation du signal à la fréquence de 67,7 KHz. En effet la bande du filtre de canal, en bord de bande autour de 100 KHz, n'est pas abrupte mais présente une pente significative. En pratique l'amortissement des signaux reçus commence bien avant une fréquence limite de 100 KHz. On notera qu'en ce qui concerne la réception des signaux de communication, cette coupure progressive (qui offre par ailleurs l'avantage d'une réalisation plus simple du filtre de canal et d'une rotation de phase moins pénalisante) n'est pas gênante parce que la quantité d'informations transmise par hertz en bord de bande est faible. L'essentiel de l'information est compris dans les basses fréquences démodulées. Un document de l'art de la technique est la demande EP 483090.

Dans l'invention, pour remédier à ces inconvénients, sans avoir par ailleurs à modifier la valeur de réglage du filtre de canal, on prévoit de décaler l'oscillateur local par excès de telle façon qu'il présente dans les conditions optimales de réglage, notamment le jour où il est neuf et où il vient d'être fabriqué, un signal à une fréquence de balise avec une valeur légèrement supérieure à une fréquence Fi normalisée attendue. Ce faisant, dans la démodulation, au lieu de soustraire seulement un signal à une fréquence Fi d'un signal de porteuse modulée reçu, on soustrait un signal à une fréquence Fi+ε'. De ce fait le signal démodulé, notamment pour la réception des signaux FCH ne sera plus un signal à une fréquence de 67,7 KHz mais un signal à une fréquence de 67,7 KHz-ε'. En conséquence, si du fait de son vieillissement l'oscillateur local vient à dériver, on dispose d'une marge de dérive égale à cette valeur de ε' avant même d'aboutir au début de la plage de tolérance imposée par le filtre de canal. En conséquence, même après plusieurs années d'utilisation, la détection des signaux FCH est améliorée et l'accrochage d'un téléphone avec une station de base est rendu plus efficace.

En pratique le décalage ε' (exprimé en terme absolu) est faible. Sa contribution peut être facilement compensée par les circuits de correction de type connu déjà en place dans les circuits de réception, et qui ont pour effet de neutraliser le décalage ε envisagé dans l'état de la technique. Le décalage ε' de l'oscillateur local est évidemment effectué par excès de façon à ce que le signal FCH démodulé soit plutôt tiré vers les basses fréquences, et devienne un signal inférieur à 67,7 KHz plutôt que vers les hautes fréquences où, en étant bien supérieur à 67,7 KHz, il risquerait d'atteindre la bande de coupure du filtre de canal, et où son amortissement empêcherait tout simplement sa détection correcte.

L'invention a donc pour objet un téléphone mobile tel que défini en revendication 1.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figures 1a et 1b : des représentations spectrales et temporelles d'un signal de type FCH à détecter avec un circuit de démodulation perfectionné selon l'invention ;
- Figure 2 : une représentation schématique d'un circuit de démodulation des signaux FCH et de leur traitement de correction selon l'invention ;
- Figure 3 : une représentation des symboles constituant en norme GSM un signal de type FCH.

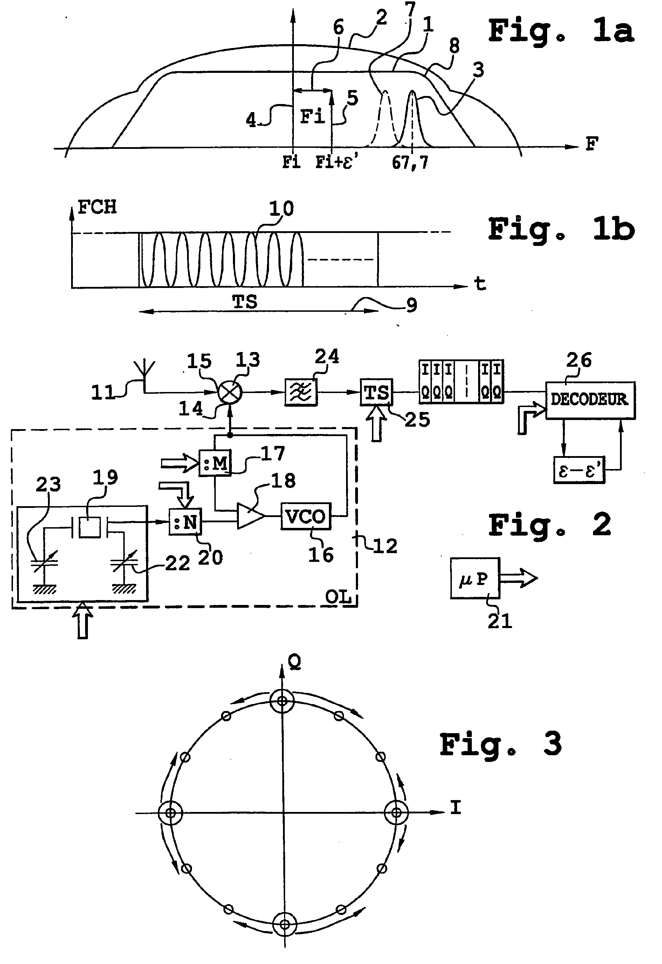

La figure 1a montre un diagramme spectral 1 d'un filtre de canal utilisable dans un circuit de démodulation selon l'invention ou selon l'état de la technique. Elle montre également le diagramme spectral 2 d'un signal modulant une porteuse destiné à être démodulé par un tel circuit de démodulation. Elle montre encore d'une manière schématique un diagramme spectral 3 d'un signal sinusoïdal pur reçu (ou presque pur car subissant toutes les distorsions de transmission) modulant une porteuse à une fréquence Fi. Dans le cadre du problème résolu par l'invention, le signal modulant la porteuse Fi est un signal à une fréquence fixe qui, dans l'exemple des normes GSM, DCS ou PCS vaut 67,7 KHz. Le diagramme de la figure 1a montre d'une manière figurative (avant transposition-démodulation) la fréquence centrale 4, à la valeur Fi, du filtre de canal et du spectre du signal 2 alors que dans la pratique, après démodulation, normalement cette fréquence centrale est nulle. A côté de cette fréquence centrale 4 on a fait figurer, avec un décalage par excès une fréquence de démodulation selon l'invention 5 de valeur Fi+ε'. La démodulation revenant à soustraire d'un signal dont la fréquence est de Fi+67,7 KHz un signal Fi, on aboutit naturellement à un signal démodulé à 67,7 KHz. Cependant, avec l'invention on aboutira à un signal égal à 67,7 KHz-ε'. L'écart 6 ε' retentit alors comme un déplacement relatif du spectre du signal 3 à l'intérieur du filtre 1 vers la fréquence centrale de ce filtre 1. Comme on le constate aisément sur la figure 1a, ce déplacement a pour effet de faire passer à travers le filtre de canal 1 un signal dont le spectre 7 est mieux centré dans ce filtre de canal.

Le filtre de canal n'ayant pas d'élément actif sa bande de coupure 8 ne se déplace pas avec le vieillissement. Par contre un oscillateur local peut avoir une fréquence qui dérive avec le temps à cause d'un tel vieillissement. Si notamment cette dérive se faisait par défaut, Fi devenant Fi-ε, sans l'invention le spectre 3 se décalerait vers les valeurs hautes de fréquence c'est à dire vers 67,7 KHz+ε. Cette valeur haute risquerait de rencontrer la bande de coupure 8. Dans ce cas, le signal FCH serait mal, voire plus du tout, détecté empêchant l'accrochage du téléphone mobile sur une station de base.

La figure 1 b montre l'allure temporelle d'un signal dont le spectre 3 est montré sur la figure 1a. Au cours d'une fenêtre temporelle TS 9 le signal FCH 10 modulant la porteuse est dans l'exemple un signal à 67,7 KHz.

La figure 2 montre un circuit de démodulation selon l'invention. Celui-ci comporte un oscillateur local 12 et un mélangeur 13. Le mélangeur 13 a deux entrées. Sur une première entrée 14 le signal provenant de l'oscillateur local 12 est introduit. Sur une autre entrée 15 de démodulation, on applique un signal en provenance d'un aérien 11 du téléphone mobile. Ce signal, typiquement le signal de la figure 1b, est un signal modulant (67,7 KHz) une porteuse à une fréquence Fi. Selon l'invention, l'oscillateur local 12 est désaccordé par excès par rapport à la fréquence Fi.

L'oscillateur local 12 est généralement constitué dans son principe d'un oscillateur 16 commandé en tension (VCO) relié à l'entrée 14 par sa sortie. La sortie de l'oscillateur 16 est également reliée à l'entrée d'un diviseur 17 qui divise la fréquence du signal de cet oscillateur 16 par une valeur M. La sortie du diviseur 17 est reliée à une première entrée d'un comparateur 18 à deux entrées. Une deuxième entrée du comparateur 18 reçoit un signal produit par un oscillateur stable 19. Dans la pratique l'oscillateur stable 19 est un quartz. Pour des raisons pratiques, l'oscillateur à quartz 19 produit un signal dont la fréquence est divisée dans un diviseur 20 par une valeur N. Dans un exemple particulier, la fréquence d'oscillation du quartz 19 est de l'ordre de 13 MHz. Dans ce cas la valeur de N est de 65 de manière à ce que la fréquence du signal introduit sur la deuxième entrée du comparateur 18 vaille 200 KHz. Schématiquement le diviseur 17 divise par 4500 de manière à ce que la fréquence du signal disponible à l'entrée 14 soit de l'ordre de 900 MHz. En effet, 900 MHz divisé par 4500 est aussi égal à 200 KHz. En conséquence, pour satisfaire à des sauts en fréquence par tranche de 200 KHz, il suffit d'imposer au diviseur 17 des valeurs de M variant d'une unité. Le schéma de l'oscillateur 12 peut être différent en pratique. Dans son principe il est celui montré, le diviseur 17 et le diviseur 20 recevant les signaux de division M et N provenant d'un microprocesseur 21 qui pilote le téléphone mobile.

Dans l'état de la technique, l'oscillateur à quartz 19 est réglé en usine d'une manière définitive, notamment par des condensateurs de pieds 22. En principe la valeur de la fréquence du signal de l'oscillateur 19 est très stable et ne devrait pas varier dans le temps. Elle est donc réglée pour que le signal disponible à la sortie du diviseur 20 soit exactement 200 KHz.

Dans l'invention on règle l'oscillateur 12 pour qu'il produise un signal à une fréquence Fi+ε' par excès et ici, compte tenu de l'architecture présentée on règle l'oscillateur à quartz 19 pour qu'il provoque cet excès. Du fait de la multiplication par M/N, la fréquence du signal de l'oscillateur 12 est proportionnelle à celle du quartz 19.

Autant l'agilité en fréquence du téléphone mobile par tranches de 200 KHz peut être réalisée au moyen du diviseur 17, autant il n'est pas possible de décaler finement chacune des fréquences Fi produite par l'oscillateur 12 quand, avec l'âge, celui-ci aura commencé à dériver.

Dans un exemple le réglage par excès est tel que, rapporté à la valeur de la fréquence Fi, l'écart par excès soit inférieur à 10 KHz. Dans la pratique on a choisi un écart de 5 KHz. Dans ce cas, en GSM 900 MHz l'écart est respectivement de 5.10³/900.10⁶ ou 10⁴/900.10⁶ soit 5 ppm et 10 ppm. Toutefois il convient de distinguer selon le mode d'utilisation voulu. En effet, du fait des multiplications provoquées par les diviseurs 17 et 20 un écart de 5 KHz en mode GSM (où M vaut de l'ordre de 4500) est équivalent à un écart de 10 KHz en DCS ou PCS (où M vaut de l'ordre de 9000 ou de 10500).

On pourra prévoir dans ces conditions une commutation de condensateurs de pieds 22 ou 23 selon un mode d'utilisation voulu. En variante, sachant qu'on peut tolérer 10 KHz, on pourra choisir d'effectuer un réglage à 5 KHz par excès pour le mode GSM 900 MHz sachant que ce réglage par excès induit un réglage de 10 KHz dans les modes DCS ou PCS. De préférence dans ce cas le décalage commun sera un décalage valable entre 800 MHz et 2200 MHz. Dans le premier cas, un circuit de commutation, commandé lui également par le microprocesseur 21, peut effectuer la commutation des condensateurs 22 en condensateurs 23.

Le circuit de démodulation comporte en outre un filtre de canal 24 de type passe bas et dont le spectre 1 est montré sur la figure 1a. Le signal disponible en sortie du filtre 24 est introduit dans un échantillonneur 25 de signal commandé par le microprocesseur 21. Cet échantillonneur 25 produit d'une manière connue des échantillons I et Q dont le nombre utile est de 141 par fenêtre temporelle. Dans la pratique dans une fenêtre temporelle de 577 microsecondes on a 156,25 échantillons possibles, mais les premiers et les derniers de la fenêtre ne comportent pas de signification et peuvent ne pas être reçus sans altérer la signification de la communication. Ces échantillons forment une suite de signaux I et Q relatifs à une démodulation en quadrature par le démodulateur 13.

L'échantillonneur 25 produit des échantillons I et Q qui sont transmis à un décodeur 26. D'une manière connue, le décodeur 26 est capable d'extraire, au moment de la réception des signaux FCH, une information ε relative à la dérive de l'oscillateur 12. Cette information ε est utilisée par ailleurs par le décodeur 26 pour corriger, non pas la fréquence de l'oscillateur 12 (dont on a vu que ce n'était guère possible), mais les valeurs des échantillons I et Q reçus. Cette correction de type numérique est de nature connue. La particularité dans l'invention se situe dans le fait que ε de dérive est en partie compensée par un préréglage ε'. Autrement dit le décodeur 26 produit maintenant à titre de correction un signal d'erreur égal à ε - ε'. Au début, lorsque le téléphone mobile est neuf, ε est nul, et le décodeur 26 élabore l'erreur attendue ε' avec laquelle sont en outre effectuées les corrections.

Le résultat immédiat obtenu avec l'invention est qu'en sortie du filtre 24 on dispose de signaux résultant de leur démodulation dans le démodulateur 13, alors que si on avait toléré, sans la corriger par avance, la dérive de l'oscillateur 12, il se trouverait des cas où le filtre 24 atténuerait trop fortement les signaux FCH au point qu'on ne les détecterait même pas dans l'échantillonneur 25.

La figure 3 montre, dans le cadre du GSM-DCS-PCS, l'allure d'un codage de modulation correspondant au signal à 67,7 KHz. Celui-ci est constitué, dans la constellation retenue avec 12 positions, par quatre positions préférées où les signaux I et Q valent respectivement 1 et 0, 0 et 1, -1 et 0, et 0 et -1. Dans la pratique la génération du signal FCH est synthétisée par un accumulateur de phase recevant ce type de signaux numériques. En réception les signaux I et Q attendus après décodage doivent avoir les valeurs indiquées ci-dessus. S'il y a dérive, lors d'une première mesure, les signaux I et Q, quantifiés eux-mêmes sur plusieurs bits montrent un décalage angulaire par rapport à ces valeurs. Au fur et à mesure que le signal est reçu ce décalage s'amplifie, c'est le sens de l'allongement des flèches présentées dans les différents points de la constellation. Pour une dérive donnée, bien entendu un seul sens des flèches est mis en service. Rapportés tous au point (1,0), on constate que lorsqu'il y a une dérive trop importante la dispersion des valeurs empêche l'accumulation. Au contraire, les signaux tendent à se neutraliser les uns les autres. En pratique la mesure de ε découle de cette dégradation de l'accumulation des signaux rapportés. Dans l'invention, on effectue la correction comme dans l'état de la technique : on est capable de connaître la valeur ε - ε' résultant de la dérive à terme.

A titre de perfectionnement on peut modifier l'algorithme de correction des valeurs des signaux I et Q. En effet dans l'état de la technique, la dérive peut avoir un effet de décalage par excès ou par défaut de la fréquence de l'oscillateur local. Dans l'invention, on sait, au moins au début, que ce décalage est obligatoirement par excès. Il est donc possible de modifier l'algorithme de correction pour tenir compte de cette connaissance à priori de façon à le faire converger plus rapidement. En définitive, au lieu de faire des essais avec des valeurs ε quelconques, et de ne retenir comme valeur de ε que celle qui maximise l'accumulation, on sait au départ qu'il faut faire un essai avec une valeur ε également connue d'avance réglée en usine et valant ε'. La dérive de l'oscillateur local étant lente au cours du temps, il est possible d'un jour sur l'autre ou d'un mois sur l'autre de stocker la valeur ε- ε' obtenue de manière à déduire les corrections à appliquer aux signaux I et Q mesurés (en communication) pour effectuer la correction globale.

## Revendications

1. Téléphone mobile muni d'un circuit de démodulation comportant un oscillateur local (12) et un mélangeur (13) avec une entrée (14) d'oscillateur local et une entrée (15) de démodulation, l'entrée de démodulation recevant un signal (3) modulant une porteuse à une fréquence Fi, ledit signal modulant ayant une fréquence fixe et ledit circuit de démodulation comprenant en outre un filtre de canal (24) présentant une fréquence de coupure haute (8), **caractérisé en ce que** l'oscillateur local (12) est réglé en usine pour présenter une sortie dont la fréquence est désaccordée (6) par excès par rapport à la fréquence Fi, le désaccord par excès (ε') étant déterminé de façon à ce que le signal démodulé soit tiré vers les basses fréquences, évitant ainsi d'atteindre ladite fréquence de coupure haute (8) en cas de dérive de l'oscillateur local.

2. Téléphone selon la revendication 1, **caractérisé en ce qu'**il comporte un décodeur (26) du signal modulant à la fréquence fixe capable d'extraire, à partir d'échantillons du signal modulant, une information relative à la dérive de l'oscillateur local (12), et de corriger numériquement la valeur des échantillons en utilisant ladite information.

3. Téléphone selon la revendication 2, **caractérisé en ce que** le décodeur comporte un circuit algorithmique qui extrait (ε) la correction à apporter en fonction du désaccord par excès (ε').

4. Téléphone selon l'une des revendications 1 à 3, **caractérisé en ce que** l'oscillateur comporte un oscillateur (19) à quartz produisant un signal de base et une boucle de régulation (17, 18) opérant une multiplication (M/N) de ce signal de base pour l'amener à une fréquence porteuse plus élevée.

5. Téléphone selon la revendication 4, **caractérisé en ce que** le quartz est décalé par excès pour que le désaccord par excès soit inférieur à 10 KHz.

6. Téléphone selon la revendication 5, **caractérisé en ce que** le quartz est décalé par excès pour que le désaccord par excès soit égal à 5 KHz.

7. Téléphone selon l'une des revendications 4 à 6, **caractérisé en ce que** le quartz est décalé d'une manière unique, et que le signal de porteuse modulée se situe dans une gamme de 800 MHz à 2200 MHz.

8. Téléphone selon l'une des revendications 4 à 7, **caractérisé en ce que** le quartz comporte des condensateurs de pied pour effectuer un décalage, de préférence commutable (21).

## Claims

1. Mobile telephone provided with a demodulation circuit, comprising a local oscillator (12) and a mixer (13) having a local oscillator input (14) and a demodulation input (15), the demodulation input receiving a signal (3) modulating a carrier at a frequency Fi, said modulating signal having a fixed frequency and said demodulation circuit also comprising a channel filter (24) having an upper cut-off frequency (8), **characterized in that** the local oscillator (12) is factory adjusted so that the frequency of its output is detuned (6) upwardly relative to frequency Fi, upward detuning (ε') being determined so that the demodulated signal is drawn towards the low frequencies, thereby preventing it from reaching said upper cut-off frequency (8) in the event of drift of the local oscillator.

2. Telephone as in claim 1, **characterized in that** it comprises a decoder (26) of the signal modulating at the fixed frequency able to extract information from samples of the modulating signal, relating to the drift of the local oscillator (12), and to correct the value of the samples digitally using said information.

3. Telephone as in claim 2, **characterized in that** the decoder comprises an algorithmic circuit which extracts (ε) the correction to be made in relation to the upward detuning (ε').

4. Telephone as in any of claims 1 to 3, **characterized in that** the oscillator comprises a quartz oscillator (19) producing a basic signal and a regulation loop (17,18) operating a multiplication (M/N) of this basic signal to bring it to a higher carrier frequency.

5. Telephone as in claim 4, **characterized in that** the quartz oscillator is shifted upwards so that upward detuning is less than 10 KHz.

6. Telephone as in claim 5, **characterized in that** the quartz oscillator is shifted upwards so that upward detuning is 5 KHz.

7. Telephone as in any of claims 4 to 6, **characterized in that** the quartz oscillator undergoes a single shift, and **in that** the modulated carrier signal lies in a range of 800 MHz to 2200 MHz.

8. Telephone as in any of claims 4 to 7, **characterized in that** the quartz oscillator comprises trimmer capacitors to conduct shifting, that are preferably switchable (21).

## Patentansprüche

1. Mobiltelefon, ausgestattet mit einer Schaltung zur Demodulation, die einen lokalen Oszillator (12) und einen Mischer (13) umfasst mit einem Eingang (14) des lokalen Oszillators und einen Eingang (15) für die Demodulation, wobei der Eingang für die Demodulation ein Signal (3) empfängt, das einen Träger einer Frequenz Fi moduliert und wobei das modulierende Signal eine feste Frequenz hat und die Schaltung zur Demodulation des Weiteren einen Kanalfilter (24) umfasst, der eine obere Grenzfrequenz (8) aufweist, **dadurch gekennzeichnet, dass** der lokale Oszillator (12) werksseitig so eingestellt ist, dass er einen Ausgang aufweist, dessen Frequenz zu einer höheren als der Frequenz Fi hin vorverstimmt (6) ist, wobei die Frequenzerhöhung (ε') so bestimmt ist, dass das demodulierte Signal zu den niedrigen Frequenzen hin verschoben wird, wodurch verhindert wird, dass im Falle einer Drift des lokalen Oszillators die obere Grenzfrequenz (8) erreicht wird.

2. Telefon nach Anspruch 1, **dadurch gekennzeichnet, dass** es einen Decoder (26) des modulierenden Signals mit fester Frequenz umfasst, der aus Signalmustern des modulierenden Signals eine Information bezüglich der Drift des lokalen Oszillators (12) abrufen kann und unter Verwendung dieser Information die Werte der Signalmuster digital korrigieren kann.

3. Telefon nach Anspruch 2, **dadurch gekennzeichnet, dass** der Decoder eine algorithmische Schaltung umfasst, die die von der Frequenzerhöhung (ε') abhängige anzuwendende Korrektur (e) abruft .

4. Telefon nach einem der Ansprüche 1 bis 3, **dadurch gekennzeichnet, dass** der Oszillator einen Quarzoszillator (19) umfasst, der ein Basissignal erzeugt und eine Regelschleife (17, 18), die eine Multiplikation (M/N) dieses Basissignals durchführt, um es auf eine höhere Trägerfrequenz zu verstellen.

5. Telefon nach Anspruch 4, **dadurch gekennzeichnet, dass** der Quarz so nach oben verschoben ist, dass die Frequenzerhöhung weniger als 10 KHz beträgt.

6. Telefon nach Anspruch 5, **dadurch gekennzeichnet, dass** der Quarz so nach oben verschoben ist, dass die Frequenzerhöhung 5 KHz beträgt.

7. Telefon nach einem der Ansprüche 4 bis 6, **dadurch gekennzeichnet, dass** der Quarz in eine einzige Richtung verschoben ist und dass das Trägersignal in einem Bereich von 800 MHz bis 2200 MHz liegt.

8. Telefon nach einem der Ansprüche 4 bis 7, **dadurch gekennzeichnet, dass** der Quarz Trimmerkondensatoren umfasst, um eine Verschiebung durchzuführen, die vorzugsweise schaltbar (21) ist.
